# EUROPEAN PATENT APPLICATION

(11) **EP 2 518 689 A1**
(43) Date of publication of application: **31.10.2012**
(21) Application number: 11163802.9
(22) Date of filing: 27.04.2011
(51) Int. Cl.: G06T 7/00

(54) **Method for comparing medical images of a patient**

(71) Applicant: Blokker, Cornelis, 1746 AM Dirkshorn (NL)
(72) Inventor: Blokker, Cornelis, 1746 AM Dirkshorn (NL)
(74) Representative: 't Jong, Bastiaan Jacob

(57) **Abstract**

The invention relates to a method for comparing images of a patient, which method comprises the steps of:
- arranging at least two spaced apart first markers on a body part of the patient, such as an extremity as an arm or a leg;
- measuring the exact distance between the at least two spaced apart first markers;
- obtaining a first image of the body part of the patient, which first image includes the at least two spaced apart markers;
- at a later moment repeating the steps of arranging at least two spaced apart markers on substantially the same body part of the patient, measuring the exact distance between the markers and obtaining a second image including the at least two spaced apart markers;
- comparing the first and second images by scaling the images based on the measured exact distances and the distance between the respective markers on the images.

A straight or molded grid with coordinates can be projected between the two spaced first or unique markers and measured exact distance.

The concept could further provide a ruler and surface area measurement function in order to measure and point exact wound and tissue loss distances and area information.

The vascular anatomy route of the angiogram can be projected at the exact spot using the marker dots of palpated and auscultated vascular route.

## Description

The invention relates to a method for comparing of medical images of a patient.

It is common when a patient is treated to do research and take examination images in order to diagnose and track the status of a specific disease or physical problem of a particular body part of a patient.

For example pictures are taken to track and follow up of the healing process of wounds, status of inflammation and tissue loss.

Angiograms are made in order to show the vascular anatomy route and to trace stenotic and anuerysmatic parts of arteries and veins in an arm of leg.

The topography image of the vascular anatomy route can be used to locate a particular and specific part of a vein, which can be used to cannulate a needle or inject a syringe.

The problem with the common and present methods is that images are very difficult and sometimes not to compare, as each time an image is made, the conditions are different. For example, when images of wounds and tissue loss are made at different moments in time , the distance of the camera and the zoom factor can vary.

The resulting images will most likely differ in scale, making it difficult to quantify and compare the images.

Cannulation and syringe injection based on an angiogram is difficult and sometimes almost impossible due to a lack of reference, because there has expired most likely a substantial amount of time between the moment of making the angiogram and cannulation and injecting the syringe.

Also the person making the angiogram will often be different from the person cannulating the patient. Angiograms are meant to visualize a patient specific vascular problem and how this physical problem is solved. In its origin an angiogram is not meant as a tool to determine the correct position to cannulate or inject the syringe.

It is an object of the invention to at least partially resolve the above mentioned disadvantages.

This object is achieved with a method according to the invention, which method comprises the steps of:
- arranging at least two spaced apart first markers on a body part of the patient, such as an extremity as an arm or a leg;
- measuring the distance between the at least two spaced apart first markers;
- obtaining a first image of the body part of the patient, which first image includes the at least two spaced apart markers;
- at a later moment repeating the steps of arranging at least two spaced apart markers on substantially the same body part of the patient, measuring the distance between the at least two spaced apart markers and obtaining a second image including the at least two spaced apart markers;
- comparing the first and second images by scaling the images based on the measured distances and the distance between the respective markers on the images.

By arranging markers each time an image is made and measuring the exact distance between the markers in real life, it is possible to determine the scale of the image made again and again. With the distance between the markers in the image and the measurement made in real life, it is simple to calculate the scale of the image.

As soon as the scale of images is recorded it is possible to determine dimensions based on the first image and compare them with the dimensions of the second image. The steps can be repeated, such that further images are available for comparison. This enables one to compare for example two or more images of a wound to track and record the result of the given treatment and the follow up of the the healing process.

With this method according to the invention, it is possible to compare the angiogram image with the image of the skin.

According to the invention first markers are arranged which are visible on the angiogram and then second markers are arranged on the skin. By scaling both images, the images are easily compared
and for example a good location for cannulation and injection of a syringe can easily be determined.

Preferably the first and second image are overlaid to compare the images and the result of the treatment and healing process. In particular with different types of images, this could be helpful to get a good understanding of the comparison.

A preferred embodiment of the method according to the invention comprises the step of selecting a unique feature of the body part of the patient and ensuring that the unique feature is included in the images.

For example such an unique feature could be a skinfold (wrist, elbow or axillary), a birthmark, visable vascular anatomy route, a vein junction, a scar or even a tattoo. As such a unique feature is typically stationary and does not alter or move during time, the unique feature could be used to position the scaled images. If the unique feature is present on both images, the images could be overlaid such that the unique feature on both images coincides.

This overlaid image provides professionals multi disciplinary transfer of information, treatment advice and it makes well considered elective interventions possible.It also provides vital information to point the best location for cannulation and injection of a syringe.

In another embodiment of the method according to the invention a marker coincides with unique feature. This simplifies the method as only one marker should be added and the unique feature can be used as the other marker.

In yet another embodiment of the method according to the invention a second unique feature of the part of the patient is selected and a marker coincides with the second unique feature.

By using two separate unique features, these features can also be used as markers. Furthermore, as the unique features will always be present and at the same location, comparing images including both unique features is accurate and simplified.

In another preferred embodiment of the method according to the invention the unique feature is provided by tracing a characteristic part of the veins of the part of the patient.

The vascular anatomy route under the skin can be detected by palpation or auscultation. The detected vascular anatomy route can be marked by placing marker dots on the top of the vessel. In this way a roadmap with a structure of veins appears This visualization of the vascular anatomy route facilitates the comparison of an angiogram image in which the full structure of the veins is visible. This angiogram image can be overlaid by projecting it as a layer on the exact spot on the skin.

Still another embodiment of the method according to the invention comprises the step of projecting a grid over the images, wherein the scale of the grid is adjusted to the scale of the image. The grid could be three dimensional and could be provided with coordinates.

Such a grid provides the possibility to describe at which position of the image certain particularities are present. This simplifies the transfer of knowledge and information between persons. For example a person who is making the angiogram can describe the best location to cannulate or inject a syringe by identifying a specific coordinate in the grid. A second person who is treating the patient and is about to cannulate or inject the syringe can interpret and determine this coordinate or location by comparing according to the invention the angiogram images provided with a grid with an image of the skin of the patient.

The concept according to the invention provides a ruler and surface area measurement function in order to measure and point exact wound and tissue loss distances and area information.

The images can be taken with a conventional digital photo camera. It is also possible to use modern multi media equipment and augmented reality for comparing images. In such a case, a first image is made in a conventional way.

When using augmented reality the second image is obtained live with a smart tablet with camera function or digital camera.

This real life image is combined as a overlay with the first image resulting in augmented reality.

These and other features of the invention will be elucidated in conjunction with the accompanying drawings.
Figure 1 shows a first image of the bottom part of a leg of a patient.
Figure 2 shows a second image of the leg part of figure 1.
Figure 3 shows the first and second image in overlay.
Figure 4 shows a second embodiment of the method according to the invention.
Figure 5 shows a third embodiment in which augmented reality is used.
Figure 6 shows a first function of a fourth embodiment of the invention.
Figure 7 shows a second function of a fourth embodiment of the invention.
Figure 8A and 8B show a fifth embodiment of the invention.
Figure 9 and 10 show a sixth embodiment of the invention.
Figure 11 and 12 show a variation on the sixth embodiment of figures 9 and 10.

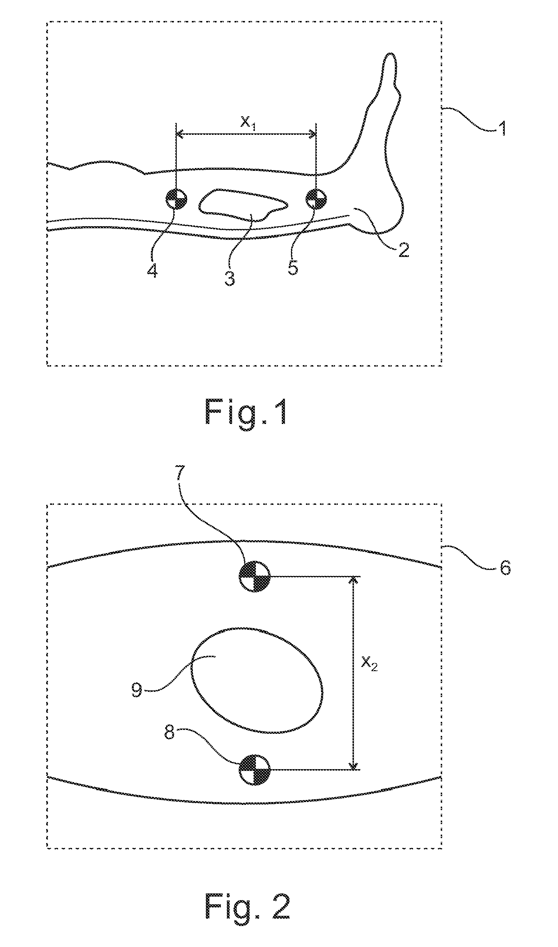

Figure 1 shows a first image 1 of the bottom part of a lower leg 2 of a patient. This image 1 is made at a first moment in time.

A wound 3 is present in the skin of the leg 2. On opposite sides of the wound 3 first markers 4, 5 are arranged, which are also shown on the image 1.

By measuring the distance x₁ between the two first markers 4, 5 in real life, it is possible to determine the scale of the image 1.

At a second moment in time a second image 6 is made of the same leg of the same patient. (see figure 2). As is clear from figure 1 and 2, the zoom factor and thus the scale of the second image 6 is substantially different from the first image 1.

Again two second markers 7, 8 are arranged around the wound 9. It is not necessary to position the second markers 7, 8 at the same location as the first markers 4, 5.

The distance x₂ between the second markers 7, 8 is again measured in real life making it possible to determine the scale of the second image 6.

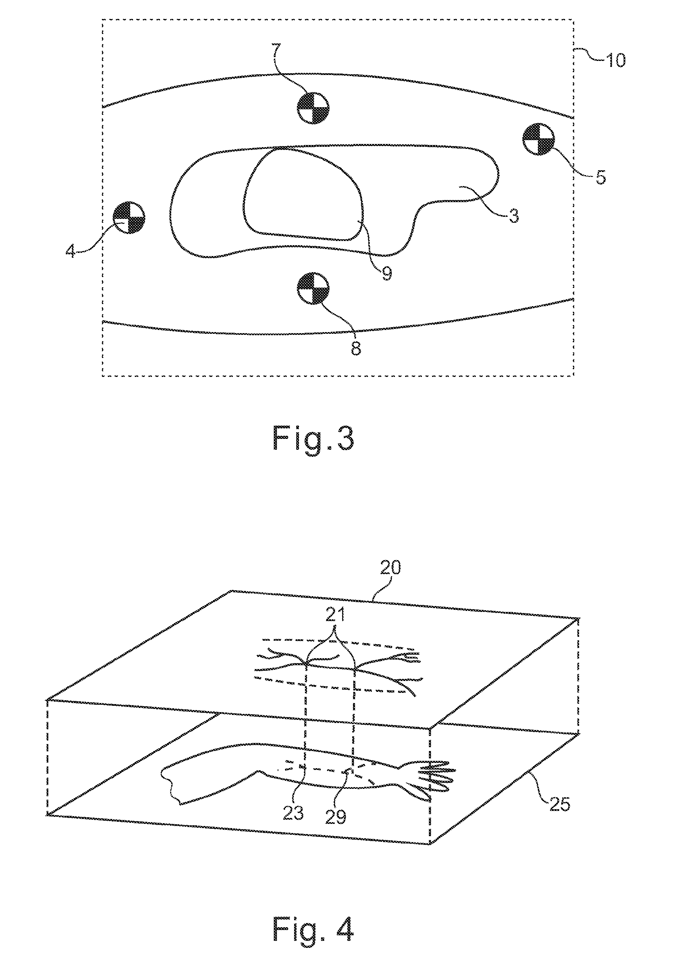

In figure 3 the two images 1 and 6 are scaled to the same scale based on the measurements of x₁ and x₂ and brought into overlay. The resulting image 10 is shown in figure 3. From the resulting image 10 it is clear that the wound 3 at the first moment in time was substantially larger, than the wound 9 at the second moment in time.

Figure 4 shows a second embodiment of the method according to the invention. In this embodiment an angiogram image 20 is made of the lower arm of a patient. The vein structure shows two unique features 21, 22.

At a second step, the vein structure is traced on the skin of the lower arm by using palpation. The main arteries and veins are detected and the unique features 23, 24 are made visible by the tracing in the second image 25.

As the vein structure does not move or alter, the unique features 21, 22 of the first image 20 can be used to scale the image to the same scale as the second image 25 by overlaying the unique features 21, 22 over the unique features 23, 24.

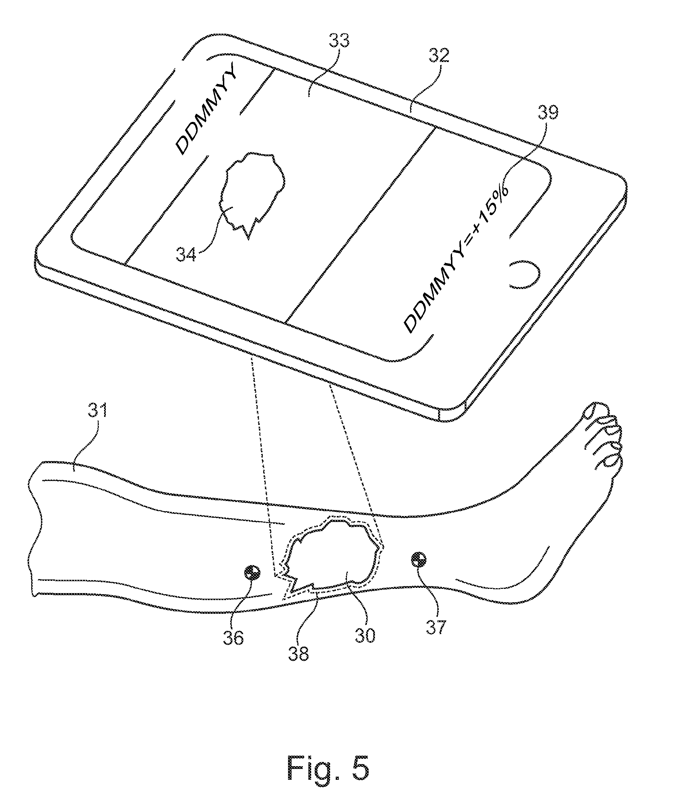

Figure 5 shows a third embodiment in which augmented reality is used. In this embodiment a wound 30 on a leg 31 is photographed or filmed with a Smart tablet or Smart Phone 32. On this screen 33, the wound 34 is displayed. As the markers 36, 37 are present on the leg 31 and the distance between the two markers 36, 37 is known, it possible to calculate the area 38 of the wound 30. Due to the augmented reality it is possible to compare the area 38 of the wound 30 with earlier registrations of the wound and display 39 the increase or decrease of the area on the Smart Tablet or Smart Phone 32.

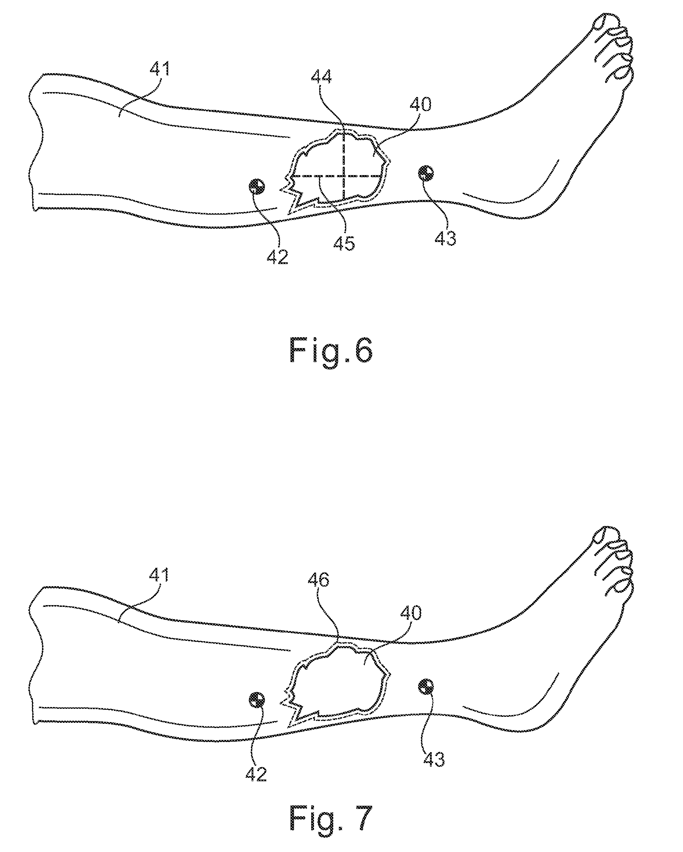

Figure 6 shows a first function of a fourth embodiment of the invention. In this figure a wound 40 on a lower leg 41 is shown. With the markers 42, 43 it is possible to determine the true dimensions of the wound 40 and determine the height 44 and width 45.

Figure 7 shows a second function of a fourth embodiment of the invention. Besides measuring the height 44 and width 45 of the wound 40, it is also possible to determine the surface area 46 of the wound 40.

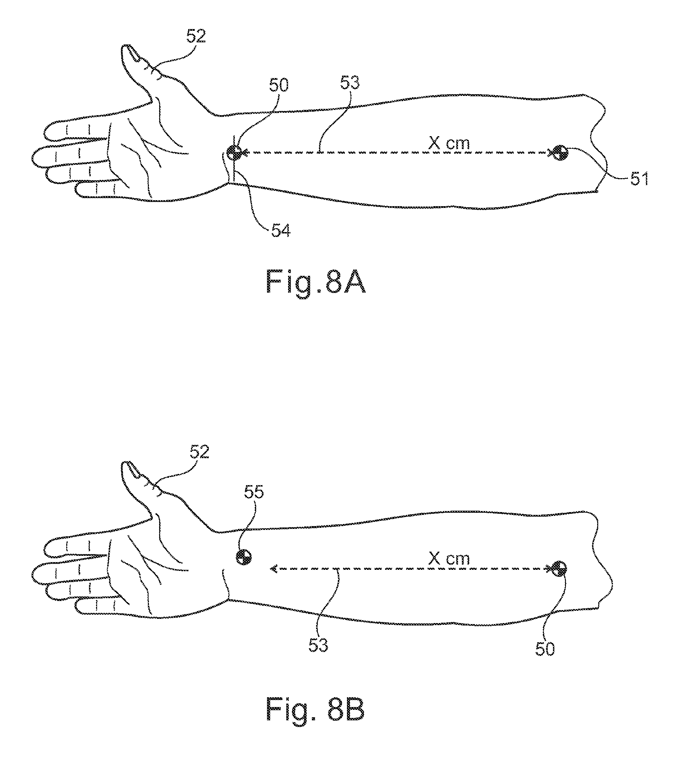

Figure 8A and 8B show a fifth embodiment of the invention. According to the invention two markers 50, 51 are necessary to determine the true dimensions of an body part like an extremity for example an arm 52 when making pictures thereof. The distance 53 between the two markers is registered and used for determining the true dimensions on a picture. One of the markers 50 could be arranged on a skinfold 54.

On the other hand, as depicted in figure 8B, one of the markers could also be embodied by a unique feature present on the skin of the arm 52, like a birthmark 55.

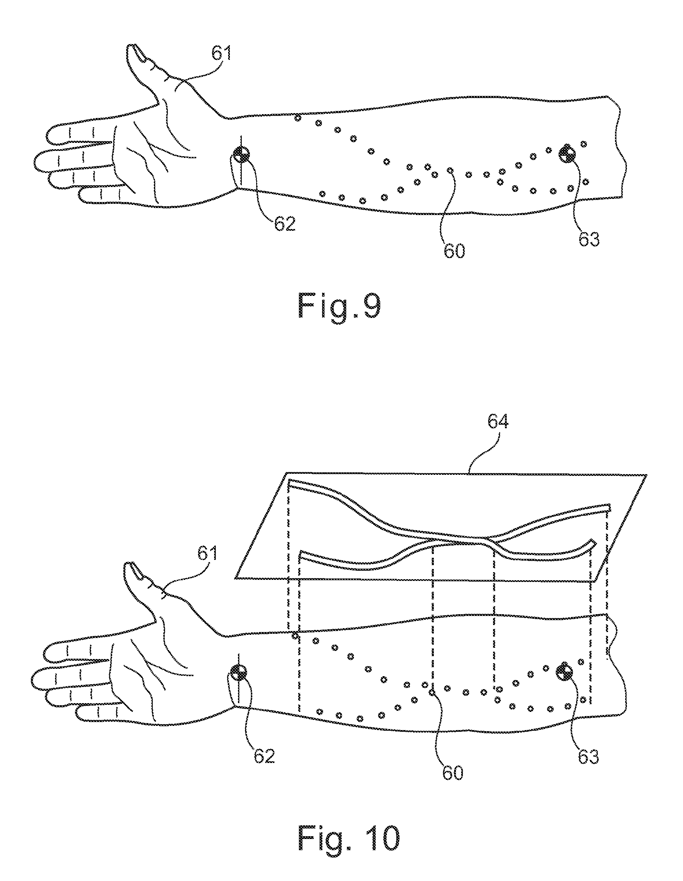

Figure 9 and 10 show a sixth embodiment of the invention. In this embodiment, the vascular - arterie and vein structure 60 is drawn on the skin of an arm 61. Furthermore markers 62, 63 arranged and the distance between the markers 62, 63 is recorded. With these markers 62, 63 and the recorded distance, it is according to the invention easy to scale an angiogram 64 and project it on the arm 61.

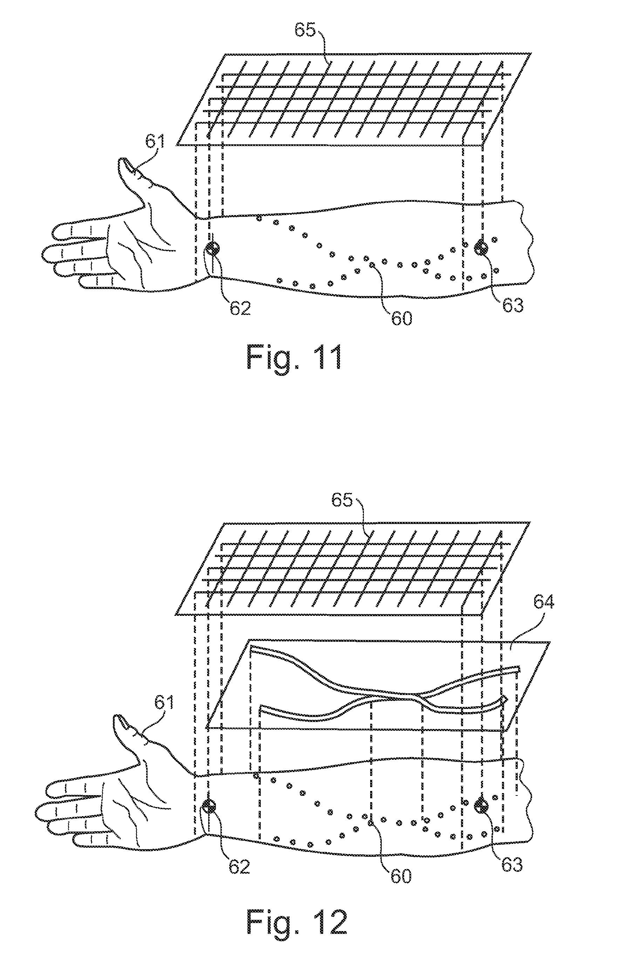

Figure 11 and 12 show a variation on the sixth embodiment of figures 9 and 10. In addition to the features already shown in figures 9 and 10, a grid 65 is projected on the arm 61 and combined with the angiogram 64. The grid 65 can be used for pinpointing a specific location and communicating this with other persons. The grid 65 can also be used for determine the size of certain parts of the vascular - arterie and vein structure.

## Claims

1. Method for comparing images of a patient, which method comprises the steps of:
- arranging at least two spaced apart first markers on a body part of the patient, such as an extremity like and arm or a leg;
- measuring the distance between the at least two spaced apart first markers;
- obtaining a first image of the body part of the patient, which first image includes the at least two spaced apart markers;
- at a later moment repeating the steps of arranging at least two spaced apart markers on substantially the same body part of the patient, measuring the distance between the markers and obtaining a second image including the at least two spaced apart markers;
- comparing the first and second images by scaling the images based on the measured distances and the distance between the respective markers on the images.

2. Method according to claim 1, wherein the first and second image are overlaid to compare the images.

3. Method according to claim 1, comprising the step of selecting an unique feature of the body part of the patient and ensuring that the unique feature is included in the images.

4. Method according to claim 3, wherein a marker coincides with unique feature.

5. Method according to claim 3 or 4, wherein a second unique feature of the body part of the patient is selected and wherein a marker coincides with the second unique feature.

6. Method according to any of the claims 3 - 5, wherein the unique feature is provided by tracing the vascular anatomy route or characteristic part of the veins of the body part of the patient.

7. Method according to any of the preceding claims, comprising the step of projecting a grid over the images, wherein the scale of the grid is adjusted to the scale of the image.

8. Method according to any of the preceding claims, comprising the step of projecting and using a ruler and area measurement function, wherein the scale of the ruler and area measurement function is adjusted to the scale of the image.
